# EUROPEAN PATENT APPLICATION

(11) **EP 1 320 186 A1**
(43) Date of publication of application: **18.06.2003**
(21) Application number: 01830750.4
(22) Date of filing: 07.12.2001
(51) Int. Cl.: H02P 9/38, H02P 9/30

(54) **Output voltage regulating device for alternators**

(71) Applicant: Linz Electric S.r.l., 37047 San Bonifacio (Verona) (IT)
(72) Inventor: Pedrollo, Silvano, 37121 Verona (IT)
(74) Representative: Lanzoni, Luciano

(57) **Abstract**

Device for regulating the output voltage V in alternators (2) having a rotor excitation circuit (3) powered through brushes (4), comprising compound excitation means (11) for generating a first unidirectional excitation current at least partly proportional to the output current of the alternator (2), and an electronic regulator (12) for generating a second unidirectional excitation current proportional to a voltage error å between the output voltage V of the alternator (2) and a reference voltage V_{ref}. The second excitation current is summed in addition to the first excitation current, obtaining the rotor excitation current which can be supplied to the excitation circuit (3) by means of the brushes (4). The electronic regulator (12) has a response time *t* variations of the output voltage V that exceeds that of the compound excitation means (11).

## Description

The present invention relates to an output voltage regulating device for alternators comprising the characteristics expressed in the preamble to claim 1.

The present invention is, in particular, preferably destined to alternators with brushes with ratings of up to about 50 kVA.

The regulating device of the present invention also finds advantageous application in the field of alternators driven by internal combustion engines.

Currently, many systems are known for exciting alternators, in which the rotor excitation current is transmitted to the rotor by means of brushes.

Substantially, three major excitation systems can be identified: compound excitation, excitation by means of electronic regulator and mixed excitation (compound and electronic regulator).

Compound excitation is simple and economical and it entails supplying the excitation circuit with suitably rectified voltage having a first component proportional to the generator output voltage, and a second component proportional to the phase current of the generator.

However, this type of excitation entails several drawbacks.

In particular, compound excitation cannot guarantee with good precision the constant value of the output voltage with load variations, in particular with variations of the cosn thereof.

Moreover, the compound system does not allow to compensate for voltage variations due to variations in the temperature of the windings (and hence of their resistance).

In regard to excitation by means of electronic regulator, it is based on the comparison between the voltage across the alternator, and a reference voltage.

Although electronic regulation allows an excellent precision of the output voltage, it too has drawbacks when it is used in alternators with brushes.

This is because electronic adjustment on one hand has a poor capacity to start electric motor, on the other it has a high response speed which entails an excessively rapid demand for torque from the thermal engine, with a consequent mechanical stress thereto.

An example of the mixed excitation systems known today is described in patent EP 187 946 in the name of M.E.C.C. ALTE S.p.A..

Mixed excitation systems use two excitation windings, one in which circulates the excitation current produced by the compound system, the other in which circulates the excitation current produced by the electronic regulator.

Devices are known in which the electronic regulation acts in subtraction to the excitation given by the compound, others in which it acts in addition, and yet others, such as the one of patent EP 187 946, in which the regulator can act in addition or in subtraction.

However, this type of regulating devices is not wholly free of drawbacks.

A first drawback is given by the higher cost of production, caused by the need to create an auxiliary excitation system with two separate windings, one for the electronic regulator, the other for the compound regulator.

In the second place this regulation system has a speed of response to load variation that is similar to that of a system with the electronic regulator alone, with the same drawbacks.

Additionally, in case of failure of the compound system, these devices are not able to allow the machine to continue operating correctly with the electronic regulation alone.

In this situation, the technical task constituting the basis for the present invention is to obtain a device for regulating the output voltage for alternators, which overcomes the aforementioned drawbacks.

In particular, a technical task of the present invention is to obtain a device for regulating the output voltage for alternators that is provided with a dual excitation system (compound and electronic regulator) using a single rotor winding.

Yet another technical task of the present invention is to obtain a device for regulating the output voltage for alternators whose time of response to load variations is optimal for alternators driven by an internal combustion engine.

A further technical task of the present invention is to obtain a device for regulating the output voltage for alternators in which each of the two excitation systems can make the alternator operate properly in case of failure to the other system.

The specified technical task and the indicated aims are substantially achieved by a device for regulating the output voltage for alternators, as described in the accompanying claims.

Further characteristics and advantages of the present invention shall become more readily apparent from the detailed description of a preferred, but not exclusive, embodiment of a device for regulating the output voltage for alternators, illustrated in the accompanying drawings, in which:
- Figure 1 shows a regulating device of the present invention applied to a three-phase alternator;
- Figure 2 shows a diagram of an electronic regulator comprised in the device of Figure 1; and
- Figure 3 shows the behaviour of an integrator comprised in the electronic regulator of Figure 2.

With reference to the aforesaid figures, the reference number 1 globally indicates a device for regulating the output voltage for alternators 2, according to the present invention.

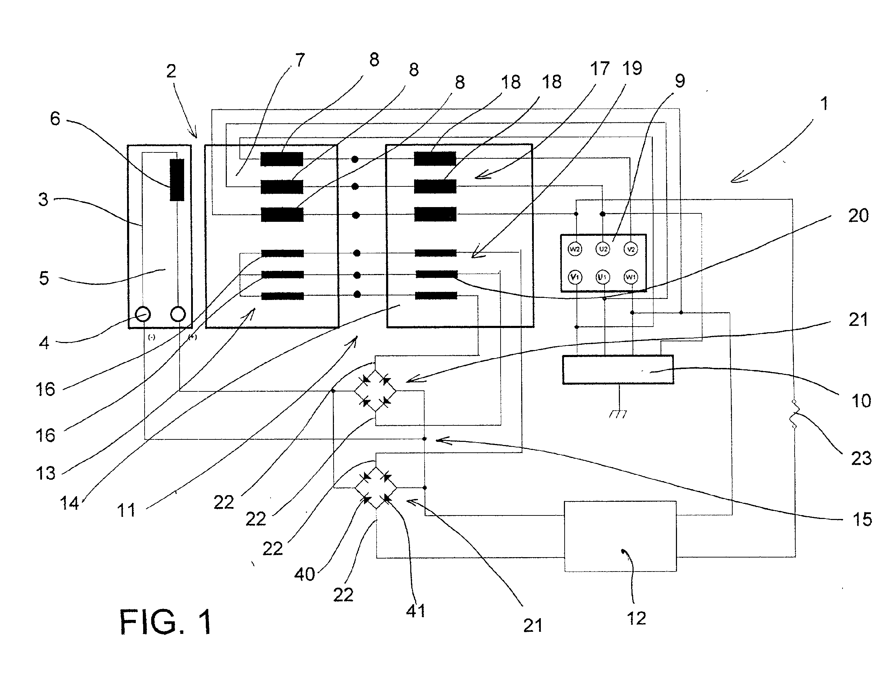

As shown in Figure 1, the device 1 for regulating the voltage according to the present invention can advantageously be applied to three-phase alternators 2 having a rotor excitation circuit 3 powered through brushes 4, although it can be applied also to single-phase alternators 2 with appropriate adaptations.

The alternator 2 comprises a rotor 5 whereon is wound the excitation winding 6, and a stator 7 whereon are wound three main phase windings 8. The ends of each winding 8 are then made available on an external terminal board 9, whereon can be effected the star or triangle connection of the three phases u, v and w generated by the alternator 2.

At the output of the alternator 2 of Figure 1 is also connected a known filter 10, not covered by the present invention.

The regulating device 1 comprises two main parts, compound excitation means 11 for generating a first unidirectional excitation current at least partly proportional to the output current of the alternator 2, and an electronic regulator 12 for generating a second unidirectional current, proportional to a voltage error å between the output voltage V of the alternator 2 and a reference voltage V_{ref}.

The fundamental technical solution of the present invention is that the first and the second excitation current are summed by mutual addition, generating the rotor excitation current which is then transmitted to the rotor 5 through the brushes 4.

This is obtained by calibrating the compound excitation means 11 in such a way as to under-excite the alternator 2 relative to the actual need, the missing excitation being supplied by the electronic regulator 12.

The compound excitation means 11 comprise an auxiliary voltage generator 13, a current transformer 14 and a two-way rectifier 15. The auxiliary voltage generator 13, whose main task is to power the rotor 5 also under loadless conditions, is constituted by three auxiliary stator windings 16 insulated from the main ones 8, and mutually connected in a star configuration. Said auxiliary windings 16 are also excited by the rotor excitation circuit 3, and provide the self-excitation of the alternator 2 when there is no load.

The current transformer 14 shown in Figure 1 is a three-phase transformer with air gap, having a primary 17 constituted by three primary windings 18 able to be mounted in series to the main windings 18 corresponding to the three phases u, v, w of the alternator 2, and a secondary 19 constituted in turn by three secondary windings 20 mounted in series to the auxiliary stator windings 16 of the auxiliary generator 13.

The current transformer 14 makes available on each secondary winding 19 a current proportional to the relative phase current provided by the alternator 2, which is summed to the contribution by the auxiliary generator 13.

Downstream of the secondary 19 of the current transformer 14, the three phases of the compound excitation means 11 enter a three-phase two-way rectifier 15, whose output terminals are connected to the brushes 4.

In the illustrated embodiment, instead of the three-phase rectifier 15, two single-phase Graetz bridges 21 are used, for a total of four voltage inputs 22.

This solution advantageously allows to use three voltage inputs 22 for the three phases of the compound excitation means 11, and the fourth input 22 for the electronic regulator 12 in the ways described below.

As shown in Figure 1, the electronic regulator 12 is powered by an output phase of the alternator 2. The connection between the regulator and the terminal board 9 of the alternator 2 can be opened by means of an appropriate separation fuse 23.

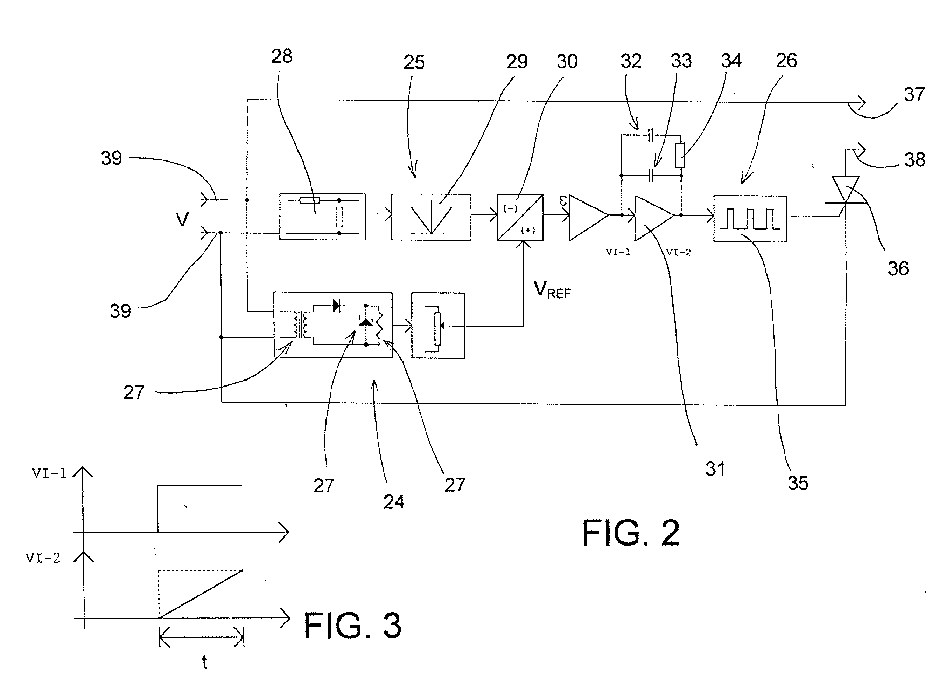

The electronic regulator 12, schematically shown in Figure 2, comprises means 24 for generating the reference voltage V_{ref}, means 25 for comparing the voltage V with the reference voltage V_{ref}, calculating the voltage error å, and means 26 for generating the second excitation current according to the calculated voltage error å.

The means 24 for generating the reference tension V_{ref} are of a known type, with the sole characterisation of being constituted by electrical components 27 having balanced coefficients of variation with temperature, in order to be substantially insensitive to temperature variations.

The comparison means 25, powered in parallel to the means 24 for generating the reference voltage V_{ref}, comprise a voltage divider 28 wherefrom is obtained a voltage proportional to the phase voltage, whose absolute value is subsequently calculated in an appropriate element 29.

This rectified fraction of the output voltage of the alternator 2 is then subtracted, in an appropriate adder 30, from the reference voltage V_{ref} obtaining the voltage error å.

The voltage error å is then amplified and integrated by a voltage integrator 31.

The behaviour of the integrator 31 is illustrated in Figure 3 which shows how as a result of a stepped voltage error å (Vᵢ₋₁), downstream of the integrator 31 there is an increase in the voltage Vᵢ₋₂ with a ramp profile. The rise time *t* of the ramp is determined by the integrator 31 and corresponds to the time *t* in which the electronic regulator 12 responds to the load variations of the alternator 2. Advantageously, said response time *t* must exceed the response time of the compound excitation means 11, in order to leave the latter with the task of the first compensation of the load variations which emerge.

The duration of the response time *t* is obtained, as shown in Figure 2, with two capacitors in parallel, a main capacitor 32 and an auxiliary capacitor 33.

The duration of the response time *t* is determined for the most part by the main capacitor 32 whose capacity is much greater than that of the auxiliary capacitor 33.

In series to the main capacitor 32 is connected a switching device 34 which allows to open the circuit branch whereon it is mounted, in the ways indicated hereafter, with a consequent decrease of the response time *t* of the integrator 31 (because of the release of the main capacitor 32).

Depending on the requirements the switching device 34 can be constituted, for instance, by an accessible jumper cable that can be physically cut if necessary, by a switch (mechanical or electronic), by a fuse, or by yet other means.

In a preferred embodiment the integrator 31 (and hence the electronic regulator 12) has a response time *t* of about 5 seconds when the main capacitor 32 is inserted.

The output voltage from the integrator 31 then enters a pulse generator 35 which commands a controlled diode 36, such an SCR, able to be switched between an operating condition in which it allows to supply the second current to the excitation circuit 3, and an interdiction condition in which it prevents the second excitation current from being supplied.

The output terminals 37, 38 of the regulator are distinguished in a positive terminal 37 and a negative terminal 38.

The positive terminal 37, equipotential with one of the input terminals 39, is connected to the free input 22 of the rectifier 15, whilst the negative terminal 38 is connected to the negative terminal 38 of the brushes 4.

The negative terminal 38 is also connected, upstream, with the other input terminal of the electronic regulator 12, though the connection between the two is intercepted by the controlled diode 36 that determines its closure and opening.

In regard to the fourth branch of the rectifier 15 whereto the electronic regulator 12 is connected, in it can be distinguished the two diodes 40, 41, according to their function (described hereafter), into separator diode 40 and recirculation diode 41.

As stated, the compound excitation means 11 must be calibrated in such a way as to under-power the alternator 2.

This is obtained while calibrating the machine 2, acting on the size of the air gap of the current transformer 14 with the machine 2 in loadless conditions. In this situation, the compound circuit is powered by the auxiliary generator 13 alone, and it has an impedance given by the sum of the impedance of the rotor 5 and of the auxiliary windings 16, and by the impedance of the current transformer 14 which can be varied by acting on the air gap.

During the normal operation of the alternator 2 the compound excitation means 11 provide most of the necessary excitation, the remaining part being provided by the electronic regulator 12.

When load variations occur, given the high response time of the electronic regulator 12, they are first of all compensated by the compound excitation means 11. Only subsequently does the electronic regulator 12 intervene.

Note in any case that the electronic regulator 12 can intervene only in addition to the compound excitation 11, so that in case of a decrease in the load (with consequent raise in the output voltage V above the reference voltage V_{ref}), the electronic regulator 12 does not intervene until the output voltage V returns below the reference value V_{ref}. At this point it starts to intervene, but its effect becomes evident only after the delay time *t* has elapsed.

In regard to the separator diode 40 and the recirculation diode 41, they behave differently from those of the other branches of the Graetz bridges 21.

In particular, the separator diode 40 determines, together with the controlled diode 36 of the electronic regulator 12 (and also by itself in case of failure thereof), the unidirectional nature of the second excitation current.

The recirculation diode 41 instead, in addition simply to preventing the short-circuiting of the electronic regulator 12, allows to re-close the rotor current when the regulator 12 instantaneously ceases to provide the second excitation current (said recirculation diode 41 is necessary because of the inductive nature of the load constituted by the rotor winding 6).

The present invention achieves important advantages.

In the first place, the device for regulating the output voltage for alternators of the present invention allows to use a mixed excitation system, although it is not necessary to provide two distinct windings on the rotor.

In the second place, the regulating device of the present invention, while having at steady state the typical precision of electronic regulators in maintaining the voltage constant, has a slow time of response to load variations, thereby allowing the compound regulation to govern the response time of the alternator, favouring the reaction of the primary engine that drives the alternator.

Moreover, the two excitation systems can operate in autonomous and independent fashion, and thus one of them by itself can keep the alternator operating in case of failure of the other. This obviously holds true provided that both the compound excitation means and the electronic regulator are appropriately dimensioned.

In case of operation with the electronic regulator alone, it will be necessary to operate the switching device in such a way as to shorten the response time of the integrator, bringing the total response time of the alternator to acceptable values for proper operation.

In case of failure of the electronic regulator, it is instead sufficient to modify the air gap of the current transformer in such a way as to enable the compound excitation means to provide all necessary excitation by themselves.

In particular, simply by removing the fuse the machine can be transformed from one excited with a mixed system, to one excited to a compound-only system.

Additionally, the regulating device of the present invention is insensitive to temperature variations.

It should also be noted that the present invention is relatively easy to produce and that the cost connected to its realisation is not very high relative to the standards of the industry.

The invention thus conceived can be subject to numerous modifications and variations, without thereby departing from the scope of the inventive concept that characterises it.

All components can be replaced with technically equivalent elements and in practice all materials employed, as well as the shapes and dimensions of the various components, may be any depending on requirements.

## Claims

1. Device for regulating the output voltage V in alternators (2) having a rotor excitation circuit (3) powered by means of brushes (4), comprising compound excitation means (11) for generating a first unidirectional excitation current at least partly proportional to the output current of the alternator (2), and an electronic regulator (12) for generating a second unidirectional excitation current proportional to a voltage error å between the output voltage V of the alternator (2) and a reference voltage V_{ref}, **characterised in that** said second excitation current is summed in addition to said first excitation current obtaining the rotor excitation current which can be supplied to said excitation circuit (3) by means of said brushes (4).

2. Regulating device as claimed in claim 1, **characterised in that** said electronic regulator (12) has a response time *t* to variations of the output voltage V that exceeds that of said compound excitation means (11).

3. Regulating device as claimed in claim 1 or 2 **characterised in that** said compound excitation means (11) comprise: a current transformer (14) having a primary (17) able to be mounted downstream of the alternator (2) and a secondary (19), said current transformer (14) making available on the secondary (19) a current proportional to the current supplied by the alternator (2); and a two-way rectifier (15) connected downstream of the secondary (19) of the current transformer (14) to supply the first unidirectional excitation current to said brushes (4).

4. Regulating device as claimed in claim 3 **characterised in that** said compound excitation means (11) further comprise an auxiliary voltage generator (13) able to be mounted on the stator (7) of the alternator (2), and excited by said excitation circuit (3), to supply the excitation circuit (3) with a voltage proportional to the output voltage V of the alternator (2) and keep the alternator (2) excited in the absence of a load.

5. Regulating device as claimed in any of the claims from 1 to 4 **characterised in that** said electronic regulator (12) comprises: means (24) for generating said reference voltage V_{ref}; means (25) for comparing the output voltage V to said reference voltage V_{ref}, computing the voltage error å; and means (26) for generating the second excitation current according to said voltage error å.

6. Regulating device as claimed in claim 5 **characterised in that** said means (24) for generating the reference voltage V_{ref} are insensitive to temperature variations, and are constituted by components (27) whose variations with temperature are balanced.

7. Regulating device as claimed in claims 5 or 6 **characterised in that** said comparison means (25) comprise an adder (30) in which at least a rectified fraction of said output voltage V is subtracted from said reference voltage V_{ref} obtaining said voltage error å.

8. Regulating device as claimed in any of the claims from 5 to 7 **characterised in that** said means (24) for generating said second excitation current comprise at least an integrator (31) of said voltage error å, a pulse generator (35) connected downstream of said integrator (31) and a controlled diode (36) commanded by said pulse generator (35), said controlled diode (36) being able to be switched between an operating condition in which it allows the second current to be supplied to the excitation circuit (3), and an interdiction condition in which it prevents the second excitation current from being supplied.

9. Regulating device as claimed in claim 8 **characterised in that** said integrator (31) has a response time of at least five seconds.

10. Regulating device as claimed in claim 8 o 9 **characterised in that** said integrator (31) comprises two capacitors in parallel, a main capacitor (32) and an auxiliary capacitor (33), and a switching device (34) in series to the main capacitor (32), to allow the main capacitor (32) to be disconnected.

11. Device for regulating the voltage in three-phase alternators (2) as claimed in any of the previous claims, **characterised in that** said compound excitation means (11) generate said first current according to the three phase currents of the alternators (2).

12. Regulating device as claimed in claims 11 and 3 **characterised in that** said current transformer (14) has three primaries (17) and three secondaries (19), each secondary (19) being connected to a distinct branch of the two-way rectifier (15), said electronic regulator (12) being connected to an additional branch of the two-way rectifier (15), to add the second excitation current to the first excitation current output from the two-way rectifier (15).
